# EUROPEAN PATENT SPECIFICATION

(11) **EP 2 064 789 B1**
(45) Date of publication and mention of the grant of the patent: **30.03.2016**
(21) Application number: 07789031.7
(22) Date of filing: 20.07.2007
(51) Int. Cl.: G02B 6/44, H02G 1/08

(54) **LAYING NETWORK CABLES IN SEWERS**
VERFAHREN ZUM VERLEGEN VON NETZ-KABELN IN ABWASSERKANÄLE
POSE DE CABLES DE RESEAU DANS DES EGOUTS

(30) Priority: 20.07.2006 GB 0614412; 14.03.2007 GB 0704893
(43) Date of publication of application: 03.06.2009
(73) Proprietor: Fibre Optic Solutions Limited, Oswestry Shropshire SY10 8GA (GB)
(72) Inventor: THOMAS, Elfed, Merseyside WA12 OJQ (GB)
(74) Representative: Wilson Gunn
(86) International application number: PCT/GB2007/002769
(87) International publication number: WO 2008/009964

(56) References cited:
- DE-A1- 19 734 274

## Description

The present invention relates to the laying of cables in sewers, and in particular to a means for enabling such cables to be laid along the flow channel at the bottom of a sewer. Such an installation is known from DE-A1-19734274.

In order to install a new hardwired network, it is necessary to provide cables linking the various nodes in the network. Often, this will require the cables to link nodes at one address with nodes at one or more different addresses. In order to minimise disruption caused by the laying of new cables, some network installers have taken to laying cables within sewer pipes rather than constructing dedicated conduits. This provides a convenient path for the cable that is relatively sheltered and can cost less than providing a dedicated conduit. Furthermore, providing a dedicated conduit would typically involve digging a trench for the conduit and filling the trench after installing the conduit, which causes considerable disruption to others, particularly if the cable is to be laid in an urban area.

When laying cables within a sewer, the cheapest and simplest solution is to lay the cables along the flow channel at the bottom of the sewer. A cable lying parallel to the direction of flow in the flow channel has a minor to negligible effect on the flow rate and a similarly minor likelihood of snagging debris and thus blocking of the flow channel. At some point however, the cable must enter/exit the flow channel. At such points, the cable lies across the direction of flow and thus creates a significant barrier to flow and a greatly increased chance of causing a blockage. Accordingly, sewer operators are reluctant to allow cables to be laid in this manner.

An alternative solution has been to pin the cable to the roof of the sewer. This avoids the potential for blockage, however, this solution is considerably more expensive than laying the cable along the flow channel and is often more expensive than preparing a dedicated cable conduit.

It is therefore an object of the present invention to enable a cable to be laid in a sewer in such a manner that alleviates or overcomes the above problems.

According to a first aspect of the present invention there is provided a cable guide, suitable for enabling a cable lying in the flow channel of a sewer to traverse and exit the flow channel without substantially impeding the flow, the cable guide comprising: a body section adapted to lie substantially flush with the wall of the flow channel; and an arm section projecting from the body section, the arm section having a distal end positioned outside the flow channel when the body section lies flush with the flow channel wherein the arm section provides a passage suitable for carrying a cable, the passage extending between an opening provided in the body section and an opening provided at the distal end of the arm section.

The passage in the cable guide above thus provides a means by which a cable can traverse the flow channel with minimal disturbance to the flow.

The cable guide may be formed from Polyvinyl Chloride, Polypropylene, Glass Reinforced Plastic, stainless steel or any other material suitable for resisting decomposition by chemical or biological agents likely to be present within the sewer effluents such as oils, acids and other substances.

The body section may be adapted to lie substantially flush with: one wall of the flow channel; one wall of the flow channel and at least part of the base of the flow channel; or both walls of the flow channel and the base of the flow channel. In order that the body section may lie substantially flush with the wall of the flow channel, one face of the body section may be shaped to correspond with the wall of the flow channel. In some embodiments, the body may be shaped so as to lie within a recess provided in the wall of the flow channel.

A second face of the body section forms a boundary to the flow channel. The second face may be shaped and/or otherwise adapted to minimise disturbance of the flow. The opening provided on the body section may be provided on the second face.

The cable may run across the second face of the body to the opening. In such embodiments, in order to ensure that the cable enters the opening at an angle that will minimise impedance of the flow, one or more cable clips may be provided. The or each clip may be provided on the second face of the body section. In such embodiments, the clips may be formed integrally with the body portion. Additionally or alternatively, one or more cable clips may be provided directly on the walls or base of the flow channel. Preferably, one cable clip is provided adjacent to the opening provided in the second face of the body section. In one preferred embodiment, the or each clip comprises a pair of resilient jaws adapted to retain a cable pushed into a position between the jaws. Additionally, to further secure the retention of the cable, a locking element may be provided, the locking element adapted, in use, to wrap over the cable and enclose the cable within the clip. Preferably, the clip (and in such embodiments the locking element) will be formed from stainless steel.

Alternatively, the opening may be provided at or towards the periphery of the second face and the cable may run behind the second face. In such embodiments, the cable may run in an extension of the passageway between the first and second faces. In an alternative to this arrangement, the cable may run across the first face of the body to enter the passageway. In order to maintain the substantially flush relationship between the body section and the wall of the flow channel, either or both may be provided with a recessed channel along which the cable may run.

The arm section may be provided in a fixed relationship to the body portion. Alternatively, the arm section may be adapted such that its orientation relative to the body portion may be varied and/or such that it may be bent into an advantageous shape or position. Similarly, the body section may be adapted to be bent into an advantageous shape. This will allow the cable guide to be adapted to local variations in the size and/or shape of the flow channel.

The arm section may be adapted to minimise disturbance to any flow outside the flow channel. Such additional flows may occur during peak usage or due to dissipation of heavy rainfall. To achieve this, the arm section may have a lower face adapted to lie flush with the sewer. Additionally, the arm section may have an upper face shaped and/or otherwise adapted to minimise disturbance of the flow.

The arm section and/or the body portion may be retained in position by use of a suitable adhesive, such as an epoxy resin or similar. Preferably, the adhesive is adapted to cure within a time period of say, 1 hour or less. Most preferably, the adhesive is adapted to cure within a time period of say, 15 minutes or less. Advantageously, the adhesive is adapted to cure in the presence of water. Alternatively, the body section may be secured in position by means of suitable fixing means. The suitable fixing means may comprise bolts, screws, nails or similar driven into the wall of the flow channel through fixing holes provided in the body.

In some embodiments, the arm section may be adapted to lie in a pre-existing or specifically prepared groove or recess in the sewer. In such embodiments, the arm section may be retained in the groove or recess by adhesive or any other suitable means. Preferably, in such embodiments, the arm section and/or body portion substantially fills the groove or recess, such that a smooth flow may be achieved. If the arm section and/or body portion does not fill the groove or recess, then a suitable filler material may be used to fill and/or smooth over the groove or recess.

In one preferred embodiment, the body section comprises a panel shaped to conform to the profile of the flow channel and the arm section comprises a tube projecting from the face of the body section adapted to conform to the profile of the flow channel.

According to a second aspect of the present invention there is provided a network comprising: one or more cables laid along the flow channels of sewers; and one or more cable guides according to the first aspect of the present invention.

The network of the second aspect of the present invention may incorporate any or all of the features described in relation to the cable guide of the first aspect of the invention as desired or as appropriate.

Preferably, a cable guide according to the first aspect of the present invention is provided at each point where a cable is required to enter/exit the flow channel of a sewer. The cable guides may be provided on either side of bends and/or junctions in the sewer and at places wherein the cable is to exit the sewer altogether. At such points the cable may be pinned to the walls or roof of the sewer once it exits the flow channel. Additionally or alternatively, the cable may be passed into a bypass tube or duct or into an exit duct once it exits the flow channel. Where the cable exits the sewer, the exit point of the cable from the sewer may be sealed around the cable to inhibit the escape of noxious or unpleasant gases.

The network can be used for any data. The cables within the network may be adapted to carry electrical or optical data signals and may thus be electrical data cables or fibre optic cables as required.

According to a third aspect of the present invention there is provided a method of laying a cable network incorporating at least one cable lying in the flow channel of a sewer comprising the steps of: laying a cable in the flow channel of a sewer; installing a cable guide according to the first aspect of the present invention at points wherein the cable is required to enter/exit the flow channel; and passing the cable through the cable guide.

The method of the third aspect of the present invention may incorporate any or all of the features described in relation to the cable guide of the first aspect of the invention or the network of the second aspect of the present invention as desired or as appropriate.

In embodiments wherein a clip is provided, the method may include the additional step of fixing the cable in position using the clip.

The method may involve providing for the cable to leave the flow channel on either side of bends and/or junctions in the sewer and at places wherein the cable is to exit the sewer altogether. At such points the method may involve pinning the cable to the walls or roof of the sewer once it exits the flow channel. Additionally or alternatively, the method may involve passing the cable into a bypass tube or duct or into an exit duct once it exits the flow channel. Where the cable exits the sewer, the method may involve sealing the exit point of the cable from the sewer around the cable to inhibit the escape of noxious or unpleasant gases.

According to fourth aspect of the present invention there is provided a method of installing a cable guide in accordance with the first aspect of the present invention in the flow channel of a sewer comprising the steps of: applying adhesive to the cable guide; and positioning the cable guide at a desired location in the flow channel of a sewer.

The method of the fourth aspect of the present invention may incorporate any or all of the features described in relation to the cable guide of the first aspect of the invention, the network of the second aspect of the present invention or the method of the third aspect of the present invention as desired or as appropriate.

In relation to some embodiments, the method may incorporate the step of providing a groove or recess for the arm section and/or the body portion. The groove or recess may be formed by use of a disc cutter. This can enable the convenient formation of a groove or recess of pre-determined width and depth. In such embodiments, the method may comprise the further step of applying filler material over the arm section or body portion to provide a smooth surface.

Preferably, the filler material is of sufficient viscosity to substantially hold its shape whilst curing thus allowing the groove or recess to be filled. Advantageously, the filler material is adapted to cure in the presence of water. The filler material may be an epoxy resin. If an epoxy resin adhesive is used to retain either the arm portion or the body portion in position, the filler material may be the same epoxy resin.

In order that the invention can be more clearly understood it is now described further below with reference to the accompanying drawings:
- Figure 1: is a schematic view of the base portion of a sewer incorporating a flow channel;
- Figure 2a: shows one embodiment of a cable guide according to the present invention suitable for allowing a cable to enter/exit the flow channel of a sewer without substantially impeding the flow;
- Figure 2b: shows an alternative embodiment of a cable guide according to the present invention suitable for allowing a cable to enter/exit the flow channel of a sewer without substantially impeding the flow;
- Figure 3: shows an intermediate stage in the process of installing a cable guide according to the present invention in a flow channel of a sewer;
- Figure 4: shows a cable guide according to the present invention installed in the flow channel of a sewer;
- Figure 5a: shows a further alternative embodiment of a cable guide according to the present invention;
- Figure 5b: shows the further alternative embodiment of a cable guide according to figure installed in the flow channel of a sewer;
- Figure 5c: is a schematic cross-sectional view of how the cable guide of figure 5a fits to the wall of a flow channel;
- Figure 5d: shows how two of the cable guides of figure 5a may be used to guide a cable around a junction in a sewer;
- Figure 6: shows another alternative embodiment of a cable guide according to the present invention;
- Figure 7: shows a still further alternative embodiment of a cable guide according to the present invention; and
- Figure 8: shows an additional further alternative embodiment of a cable guide according to the present invention.

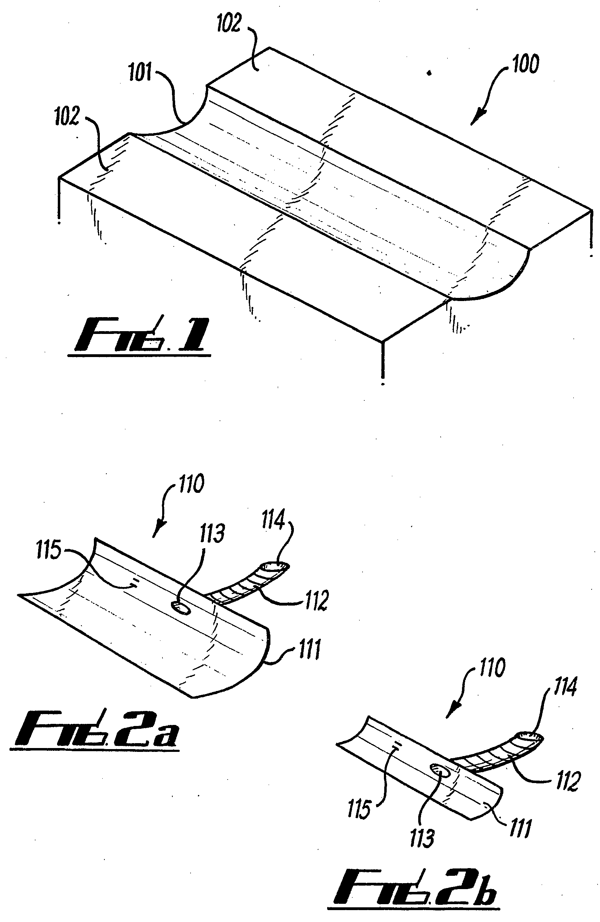

Referring now to figure 1, one form of sewer comprises a pipe having a bottom section 100 incorporating a flow channel 101 along which sewage flows. When there is a heavy flow load, the sewage can also flow over the banks 102 adjoining the flow channel 101.

Referring now to figure 2a, one embodiment of a cable guide 110 is shown. The cable guide 110 comprises a body section 111 and an arm section 112. In the present embodiment, the body comprises a panel 111 curved so as to be able to lie substantially flush with the walls of the flow channel 101 and the arm comprises a tube with an internal passage. The arm 112 projects from the body 111 and the passage within the arm 112 extends from an opening 113 provided in the body 111 to an opening 114 provided at the distal end of the arm 112. The openings 113, 114 and the passage within the arm 112 are of suitable dimensions to carry a cable 105. The body is also provided with a cable clip 115.

The cable guide 110 is formed from stainless steel. Accordingly, the cable guide 110 is able to resist decomposition by chemical or biological agents likely to be present within the sewer. In alternative embodiments, the cable guide 110 may be formed from any other suitable material.

An alternative embodiment of a cable guide 110 is shown in figure 2b. The embodiment of figure 2b differs from that of figure 2a in that the body portion 111 comprises a panel curved so as to be able to lie substantially flush with just one wall of the flow channel 101. The other features of the cable guide 110 of figure 2b are the same as those of the cable guide of figure 2a.

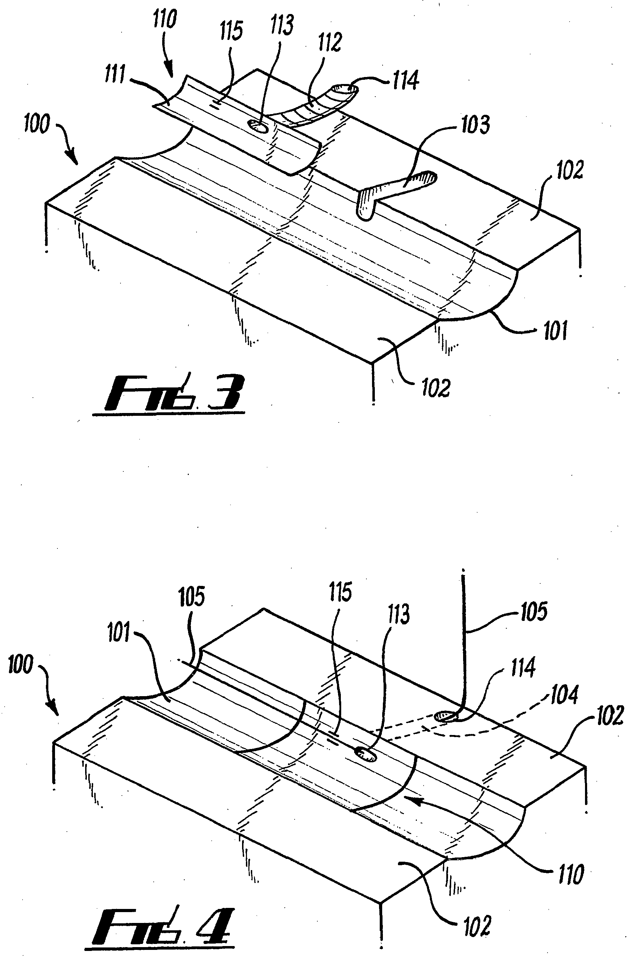

The cable guide 110 is installed into the sewer by the process illustrated in figures 3 and 4. Firstly, it is determined at what location the cable 105 is to enter/exit the flow channel 101. At this location a groove 103 is cut into the banks 102 and the side of the flow channel 101. The groove 103 is sufficiently wide and deep to accept the arm 112. Epoxy resin of a type adapted to cure under water is applied to the undersides of the body 111 and the arm 112. The cable guide 110 is then placed in the flow channel 101 such that the arm 112 lies within the groove 103. Filler material 104, which may be the same epoxy resin used to secure the body 111 and arm 112 in position, is then applied to smooth over the top of arm 112, leaving opening 114 uncovered, so as to provide minimal impediment to flow along banks 102.

Once the cable guide 110 is installed, a cable 105 can be passed through the passage between openings 113 and 114.

By utilising a cable guide in this way, disruption to the flow within the channel 101 by the entrance or exit of the cable 105 is minimised. The cable 105 can be retained in position by the cable clip 115. This prevents a high point occurring in the cable 105 as it bends to enter opening 113. Additionally, the clip 115 restricts the lateral movement of the cable 105 prior to entering opening 113, preventing the cable 105 lying across the direction of flow. In this manner, the clip 115 helps to reduce the disruption to the flow caused by the entrance/exit of the cable 105.

The cable guide 110 may be applied to the sewer in wet or dry conditions, as long as a suitable adhesive is used. As the installation process has few steps, it can be completed in under 1 hour. Accordingly, the use of such cable guides 110 along with the laying of the cable 105 loose in the flow channel 101 provides a relatively inexpensive and relatively quick method of laying cables through sewers. Accordingly, this cable guide and method may be applied to constructing networks, such as data networks, by laying cables through sewers. An additional advantage of using the cable guide according to the present invention is that if a network cable needs to be removed, the cable guide 110 can be left in place and does not provide a significant impediment to flow along the flow channel 101. Alternatively, if a cable 105 is to be replaced, it is quick and convenient to remove the old cable 105 and insert a replacement cable 105.

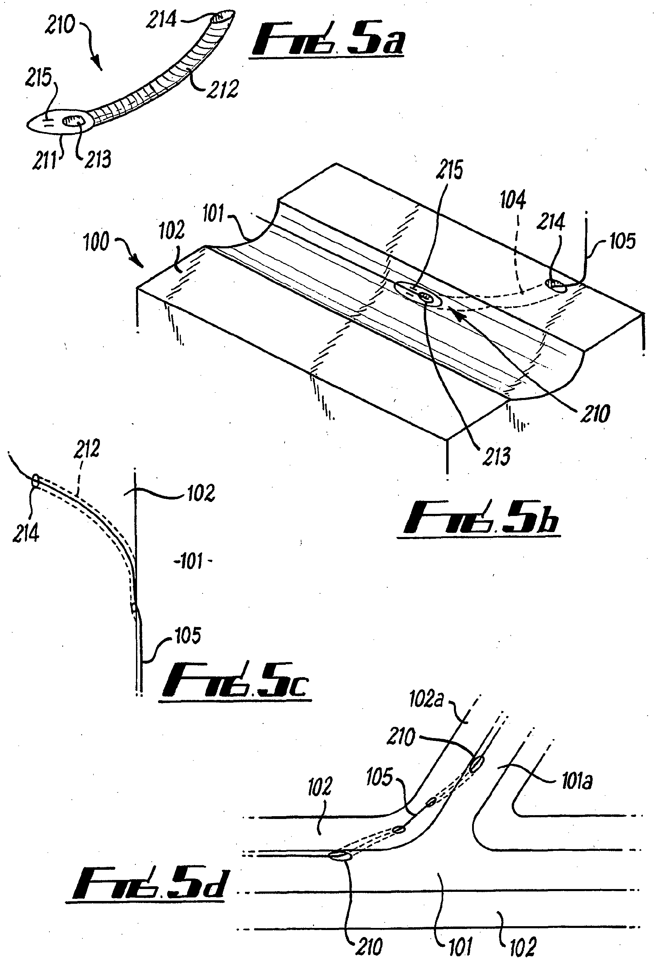

Referring now to figures 5a-d, an alternative embodiment of a cable guide 210 is shown. In this embodiment, the cable guide comprises a body section 211 and an arm section 212. This embodiment differs from the previous embodiment in that the body comprises a relatively small panel 211 curved so as to be able to lie in a recess provided in the walls of the flow channel 101 (as is shown most clearly in figure 5c) and the arm 212 which still comprises a tube with an internal passage, is relatively long compared to the body 211. As in the previous embodiment the arm 212 projects from the body 211 and the passage within the arm 212 extends from an opening 213 provided in the body 211 to an opening 214 provided at the distal end of the arm 212. The openings 213, 214 and the passage within the arm 212 are of suitable dimensions to carry a cable 105. The body 211 is also provided with a cable clip 215. This embodiment is particularly useful in larger sewers such as those with diameters in the range 0.5-4m.

Figure 5d illustrates one use of the cable guide 210. In this example, a pair of cable guides 210 are used to guide a cable 105 out of a first flow channel 101 and into a second flow channel 101a without lying across the direction of flow at the junction of the two flow channels 101, 101a. In this example, as with the other examples described below, a cable guide 110 such as those shown in figures 2a and 2b may be used in place of the cable guide 210, as desired or as appropriate.

In the example shown, the cable 105 merely lies along the banks 102 and 102a, however, in other embodiments, the cable 105 may be pinned to the bank 102, 102a or pinned to the wall and/or roof of the sewer. Similarly, these methods can be applied to other junctions, bends or similar within the sewer 101. In some sewers, a bypass tube or duct is provided which enables a tube to bypass a junction, bend or similar. Where such bypass tubes are provided, the cable may exit the flow channel using a cable guide 210 pass through the bypass tube before re-enter the flow channel via a second cable guide 210.

Another example of a position wherein the cable guide 210 may be used is in allowing the cable 105 to exit the flow channel 101 at points wherein the cable 105 is to exit the sewer 100 altogether. At such points, the cable 105 may be pinned along the sewer wall between the banks 102 and an exit duct. The exit duct may allow the cable 105 to enter its final destination (such as a building), connect to another cable, enter another sewer or other such conduit. In this manner, the cable 105 may be connected to one or more other cables or nodes to provide a network.

In order to prevent the escape of noxious or unpleasant gases from the sewer, the duct may be sealed around the cable. This may be achieved by applying a suitable filler material or adhesive around the cable 105. Alternatively, this may be achieved by providing a suitable sealing means. The sealing means may be bung adapted to fit said duct and provide a substantially airtight passage through which said cable 105 may pass.

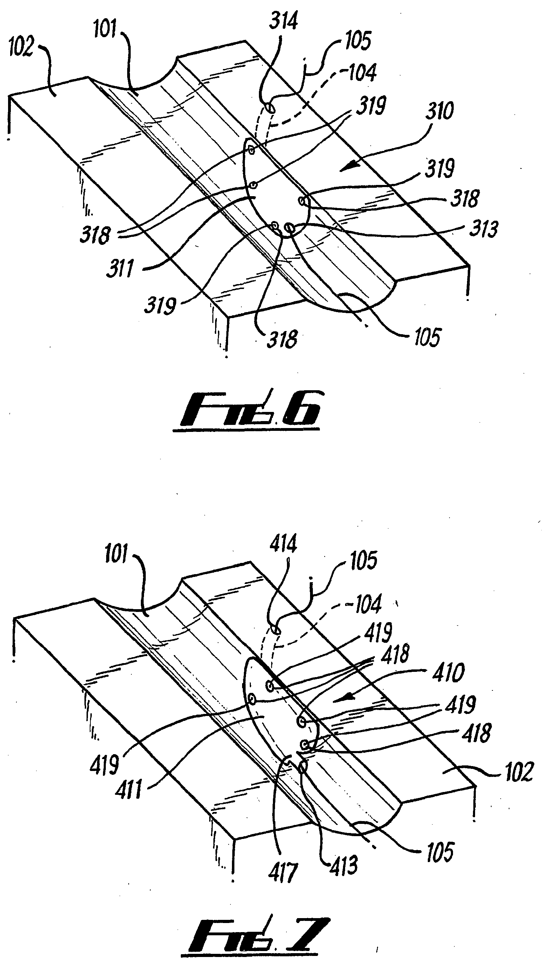

Further possible alternative embodiments of a cable guide according to the present invention are illustrated in figures 6, 7 and 8. In figure 6, the cable guide 310 has the opening 313 provided close to the periphery of the body section 311. The cable 105 runs behind the body section 311 to the arm section (not visible from this angle). Either or both of the body 311 and the flow channel 101 may be provided with a recessed channel (not shown) along which the cable 105 may run, so as to maintain the body section 311 substantially flush with the flow channel 101. The body section 311 is secured in position by fixing means 319, typically bolts, screws, nails or similar. The fixing means 319 extended through and engage holes 318 and are driven into the wall of the flow channel 101.

In figure 7, the cable guide 410 has the opening 413 provided at an end of a second arm projection 417. The cable 105 passes along a passageway provided through the body section 411 to the first arm section (not visible from this angle). As in the previous embodiment, the body section 411 is secured in position by fixing means 419, typically bolts, screws, nails or similar. The fixing means 419 extend through and engage holes 418 and are driven into the wall of the flow channel 101. If required to accommodate the cable 105, the surface of the body section 411 may have a smooth projecting bulge (not shown).

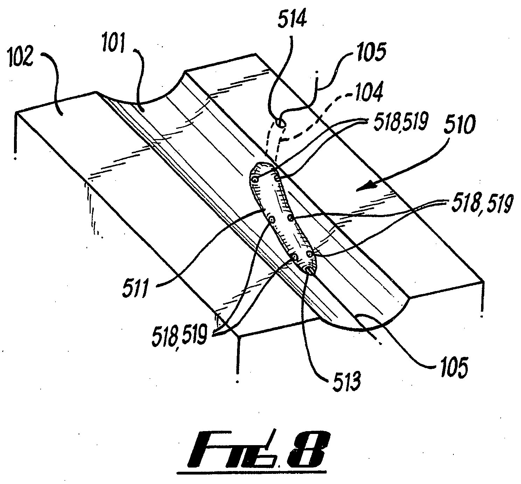

In figure 8, the cable guide 510 has the opening 513 provided at an end of a thin bulged body section 511. The cable 105 passes along a passageway provided through the body section 511 from the opening 513 to the first arm section (not visible from this angle). As in the previous embodiment, the body section 511 is secured in position by fixing means 519, typically bolts, screws, nails or similar. The fixing means 519 extend through and engage holes 518 and are driven into the wall of the flow channel 101.

Whilst the embodiments of figures 6, 7 and 8 are secured in position using fixing means such as screws, bolts, nails or similar, it is clear that they may be adapted to be secured in position by use of adhesive as described in relation to the embodiments of figures 1-5. Similarly, the embodiments of figures 1-5 may be may be adapted to be secured in position by use of fixing means such as screws, bolts, nails or similar as described in relation to the embodiments of figures 6, 7 and 8, if desired.

It is of course to be understood that the invention is not to be restricted to the details of the above embodiments which have been described by way of example only.

## Claims

1. A cable guide, suitable for enabling a cable lying in the flow channel (101) of a sewer to traverse and exit the flow channel (101) without substantially impeding the flow, the cable guide (110) comprising: a body section (111) adapted to lie substantially flush with the wall of the flow channel (101); and an arm section (112) projecting from the body section (111), the arm section (112) having a distal end positioned outside the flow channel (101) when the body section (111) lies flush with the flow channel (101) wherein the arm section (112) provides a passage suitable for carrying a cable (105), the passage extending between an opening (113) provided in the body section (111) and an opening (114) provided at the distal end of the arm section (112).

2. A cable guide as claimed in claim 1 wherein the body section (111) is adapted to lie substantially flush with: one wall of the flow channel (101); one wall of the flow channel (101) and at least part of the base of the flow channel; or both walls of the flow channel (101) and the base of the flow channel (101).

3. A cable guide as claimed in claim 2 wherein in order that the body section (111) may lie substantially flush with the wall of the flow channel (101), one face of the body section (111) is shaped to correspond with the wall of the flow channel (101) and a second face of the body section (111) forms a boundary to the flow channel, the second face shaped and/or otherwise adapted to minimise disturbance of the flow.

4. A cable guide as claimed in claim 3 wherein the opening provided on the body section (111) is provided on the second face and the cable runs across the second face of the body to the opening.

5. A cable guide as claimed in any preceding claim wherein one or more cable clips (115) are provided, the or each clip (115) on the second face of the body section (111).

6. A cable guide as claimed in claim 5 wherein the or each clip (115) comprises a pair of resilient jaws adapted to retain a cable (105) pushed into a position between the jaws.

7. A cable guide as claimed in claim 5 or claim 6 wherein a locking element is provided, the locking element adapted, in use, to wrap over the cable (105) and enclose the cable within the clip (115).

8. A cable guide as claimed in any one of claims 2 to 7 wherein the cable (105) runs across the first face of the body to enter the passageway and either or both of the body section and the wall of the flow channel is provided with a recessed channel along which the cable (105) may run.

9. A cable guide as claimed in any preceding claim wherein the arm section (112) is adapted to minimise disturbance to any flow outside the flow channel (101).

10. A cable guide as claimed in any preceding claim wherein the arm section (112) and/or the body portion (111) is retained in position by use of a suitable adhesive.

11. A cable guide as claimed in any preceding claim wherein the body section (111) is secured in position by fixing means such as bolts, screws, nails or similar driven into the wall of the flow channel (101) through fixing holes provided in the body.

12. A cable guide as claimed in any preceding claim wherein the arm section (112) and/or the body portion is adapted to lie in a pre-existing or specifically prepared groove (103) or recess in the sewer.

13. A cable guide as claimed in any preceding claim wherein the body section (111) comprises a panel (211) shaped to conform to the profile of the flow channel (101) and the arm section (112) comprises a tube projecting from the face of the body section (111) adapted to conform to the profile of the flow channel (101).

14. A network comprising: one or more cables (105) laid along the flow channels (101) of sewers; and one or more cable guides (110) according to any one of claims 1 to 13.

15. A network as claimed in claim 14 wherein a cable guide (110) is provided at each point where a cable (105) is required to enter/exit the flow channel (101) of a sewer.

16. A network as claimed in claim 14 or claim 15 wherein the cable (105) is pinned to the walls or roof of the sewer once it exits the flow channel (101) and/or the cable (105) is A passed into a bypass tube or duct or into an exit duct once it exits the flow channel (101).

17. A network as claimed in any one of claims 14 to 16 wherein the exit point of the cable (105) from the sewer is sealed around the cable (105) to inhibit the escape of noxious or unpleasant gases.

18. A network as claimed in any one of claims 14 to 17 wherein the cables (105) within the network are adapted to carry electrical data signals or optical data signals.

19. A method of laying a cable network incorporating at least one cable (105) lying in the flow channel (101) of a sewer comprising the steps of: laying a cable (105) in the flow channel (101) of a sewer; installing a cable guide (110) according to any one of claims 1 to 18 at points wherein the cable (105) is required to enter/exit the flow channel (101); and passing the cable (105) through the cable guide.

20. A method as claimed in claim 19 wherein the method involves providing for the cable (105) to leave the flow channel (101) on either side of bends and/or junctions in the sewer and at places wherein the cable (105) is to exit the sewer altogether.

21. A method as claimed in claim 19 or claim 20 wherein the method involves pinning the cable (105) to the walls or roof of the sewer once it exits the flow channel (101) and/or wherein the method involves passing the cable (105) into a bypass tube or duct or into an exit duct once it exits the flow channel (101).

22. A method as claimed in any one of claims 19 to 21 wherein the method includes sealing the exit point around the cable to (105) inhibit the escape of noxious or unpleasant gases.

23. A method of installing a cable guide of the type claimed in any one of claims 1 to 18 in the flow channel (101) of a sewer comprising the steps of: applying adhesive to the cable guide (110); and positioning the cable guide at a desired location in the flow channel (101) of a sewer.

24. A method as claimed in claim 23 wherein the method incorporates the step of providing a groove or recess for the arm section (112) and/or for the body portion (111).

25. A method as claimed in claim 23 or claim 24 wherein the method comprises the further step of applying filler material over the arm section (112) and/or the body portion to provide a smooth surface, the filler material being of sufficient viscosity to substantially hold its shape whilst curing.

## Patentansprüche

1. Kabelführung, geeignet einem in dem Fließkanal (101) eines Abwasserkanals liegenden Kabel zu ermöglichen, den Fließkanal (101) zu durchlaufen und zu verlassen, ohne den Fluss wesentlich zu behindern, wobei die Kabelführung (110) aufweist:
einen Körperbereich (111), der ausgebildet ist, im Wesentlichen bündig mit der Wand des Fließkanals (101) zu liegen; und einen Armbereich (112), der aus dem Körperbereich (111) hervorsteht, wobei der Armbereich (112) ein distales Ende hat, das außerhalb des Fließkanals (101) positioniert ist, wenn der Körperbereich (111) bündig mit dem Fließkanal (101) liegt, wobei der Armbereich (112) einen Durchgang bereitstellt, der zum Tragen eines Kabels (105) geeignet ist, wobei sich der Durchgang zwischen einer in dem Körperbereich (111) bereitgestellten Öffnung (113) und einer an dem distalen Ende des Armbereichs (112) bereitgestellten Öffnung (114) erstreckt.

2. Kabelführung nach Anspruch 1,
wobei der Körperbereich (111) ausgebildet ist, im Wesentlichen bündig zu liegen mit: einer Wand des Fließkanals (101); einer Wand des Fließkanals (101) und zumindest einem Teil der Sohle des Fließkanals; oder beiden Wänden des Fließkanals (101) und der Sohle des Fließkanals (101).

3. Kabelführung nach Anspruch 2,
wobei, damit der Körperbereich (111) im Wesentlichen bündig mit der Wand des Fließkanals (101) liegen kann, eine Seite des Körperbereichs (111) geformt ist, um mit der Wand des Fließkanals (101) zu korrespondieren, und eine zweite Seite des Körperbereichs (111) eine Grenze zu dem Fließkanal ausbildet, wobei die zweite Seite geformt und/oder anders angepasst ist, um eine Störung des Flusses zu minimieren.

4. Kabelführung nach Anspruch 3,
wobei die auf dem Körperbereich (111) bereitgestellte Öffnung auf der zweiten Seite bereitgestellt ist und das Kabel über die zweite Seite des Körpers zu der Öffnung läuft.

5. Kabelführung nach einem der vorherigen Ansprüche,
wobei eine oder mehrere Kabelschellen (115) bereitgestellt sind, wobei die oder jede Schelle (115) auf der zweiten Seite des Körperbereichs (111) ist.

6. Kabelführung nach Anspruch 5,
wobei die oder jede Schelle (115) ein Paar elastischer Backen aufweist, die ausgebildet sind, ein Kabel (105), das in eine Position zwischen den Backen gedrückt wird, festzuhalten.

7. Kabelführung nach Anspruch 5 oder 6,
wobei ein Arretierungselement bereitgestellt ist, wobei das Arretierungselement in Verwendung ausgebildet ist, das Kabel (105) zu umwickeln und das Kabel innerhalb der Schelle (115) zu umgeben.

8. Kabelführung nach einem der Ansprüche 2 bis 7,
wobei das Kabel (105) über die erste Seite des Körpers läuft, um in den Durchgangsweg einzutreten und eines oder beides von dem Körperbereich und der Wand des Fließkanals mit einem versenkten Kanal versehen ist, entlang welchem das Kabel (105) laufen kann.

9. Kabelführung nach einem der vorherigen Ansprüche,
wobei der Armbereich (112) ausgebildet ist, eine Störung eines beliebigen Flusses außerhalb des Fließkanals (101) zu minimieren.

10. Kabelführung nach einem der vorherigen Ansprüche,
wobei der Armbereich (112) und/oder der Körperbereich (111) in Position unter Verwendung eines geeigneten Haftmittels festgehalten wird.

11. Kabelführung nach einem der vorherigen Ansprüche,
wobei der Körperbereich (111) in Position durch Befestigungsmittel, wie zum Beispiel Bolzen, Schrauben, Nägel oder Ähnliches gesichert ist, die in die Wand des Fließkanals (101) durch Befestigungslöcher eingebracht sind, welche in dem Körper bereitgestellt sind.

12. Kabelführung nach einem der vorherigen Ansprüche,
wobei der Armbereich (112) und/oder der Körperbereich ausgebildet ist, in einer bereits bestehenden oder speziell erstellten Rille (103) oder Aussparung in dem Abwasserkanal zu liegen.

13. Kabelführung nach einem der vorherigen Ansprüche,
wobei der Körperbereich (111) eine Platte (211) aufweist, die geformt ist, dem Profil des Fließkanals (101) zu entsprechen, und der Armbereich (112) eine Röhre aufweist, die aus der Seite des Körperbereichs (111) hervorsteht, welcher ausgebildet ist, um dem Profil des Fließkanals (101) zu entsprechen.

14. Netz, welches aufweist:
ein oder mehrere entlang der Fließkanäle (101) von Abwasserkanälen gelegte Kabel (105); und eine oder mehrere Kabelführungen (110) nach einem der Ansprüche 1 bis 13.

15. Netz nach Anspruch 14,
wobei eine Kabelführung (110) an jedem Punkt bereitgestellt ist, wo es erforderlich ist, dass ein Kabel (105) in den Fließkanal (101) eines Abwasserkanals eintritt oder aus ihm austritt.

16. Netz nach Anspruch 14 oder 15,
wobei das Kabel (105) an die Wände oder Firste des Abwasserkanals geheftet ist, wenn es den Fließkanal (101) verlässt, und/oder das Kabel (105) ist in eine Bypass-Röhre oder -Schacht oder in einen Austrittsschacht übergehend, wenn es den Fließkanal (101) verlässt.

17. Netz nach einem der Ansprüche 14 bis 16,
wobei der Austrittspunkt des Kabels (105) aus dem Abwasserkanal um das Kabel (105) abgedichtet ist, um das Entweichen von schädlichen oder unangenehmen Gasen zu hemmen.

18. Netz nach einem der Ansprüche 14 bis 17,
wobei die Kabel (105) innerhalb des Netzes ausgebildet sind, elektrische Datensignale oder optische Datensignale zu übertragen.

19. Verfahren zum Verlegen eines Kabelnetzes, das mindestens ein Kabel (105) enthält, welches in dem Fließkanal (101) eines Abwasserkanals liegt, mit den Schritten:
Verlegen eines Kabels (105) in dem Fließkanal (101) eines Abwasserkanals; Installieren einer Kabelführung (110) gemäß einem der Ansprüche 1 bis 18 an Punkten, worin es erforderlich ist, dass das Kabel (105) in den Fließkanal (101) eintritt oder aus ihm austritt; und Durchfahren des Kabels (105) durch die Kabelführung.

20. Verfahren nach Anspruch 19,
wobei das Verfahren umfasst, dem Kabel (105) Bereitstellen den Fließkanal (101) auf beiden Seiten von Kurven und/oder Abzweigungen in dem Abwasserkanal und an Orten, worin das Kabel (105) aus dem Abwasserkanal gänzlich austritt, zu verlassen.

21. Verfahren nach Anspruch 19 oder 20,
wobei das Verfahren umfasst, Anheften des Kabels (105) an die Wände oder Firste des Abwasserkanals, wenn es aus dem Fließkanal (101) austritt und/oder wobei das Verfahren umfasst, Einfahren des Kabels (105) in eine Bypass-Röhre oder - Schacht oder in einen Austrittsschacht, wenn es den Fließkanal (101) verlässt.

22. Verfahren nach einem der Ansprüche 19 bis 21,
wobei das Verfahren Abdichten des Austrittspunkts um das Kabel (105) aufweist, um den Austritt von schädlichen oder unangenehmen Gasen zu hemmen.

23. Verfahren zum Installieren einer Kabelführung, vom Typ wie in einem der Ansprüche 1 bis 18 beansprucht, in dem Fließkanal (101) eines Abwasserkanals mit den Schritten:
Aufbringen von Haftmittel auf die Kabelführung (110); und Positionieren der Kabelführung an einem gewünschten Ort in dem Fließkanal (101) eines Abwasserkanals.

24. Verfahren nach Anspruch 23,
wobei das Verfahren die Schritte des Bereitstellens einer Rille oder Aussparung für den Armbereich (112) und/oder für den Körperbereich (111) enthält.

25. Verfahren nach Anspruch 23 oder 24,
wobei das Verfahren den weiteren Schritt des Aufbringens von Füllmaterial über den Armbereich (112) und/oder den Köperbereich aufweist, um eine glatte Oberfläche bereitzustellen, wobei das Füllmaterial eine ausreichende Viskosität aufweist, um im Wesentlichen seine Form während einem Aushärten beizubehalten.

## Revendications

1. Guide de câble, approprié pour permettre à un câble qui se situe dans le canal d'écoulement (101) d'un égout, de traverser le canal d'écoulement (101) et de sortir de celui-ci sans entraver sensiblement l'écoulement, le guide de câble (110) comprenant: une section corps (111) adaptée pour se situer sensiblement de niveau avec la paroi du canal d'écoulement (101) ; et une section bras (112) qui fait saillie à partir de la section corps (111), la section bras (112) présentant une extrémité distale positionnée à l'extérieur du canal d'écoulement (101) lorsque la section corps (111) se situe de niveau avec le canal d'écoulement (101), dans lequel la section bras (112) fournit un passage approprié pour porter un câble (105), le passage s'étendant entre une ouverture (113) disposée dans la section corps (111) et une ouverture (114) disposée au niveau de l'extrémité distale de la section bras (112).

2. Guide de câble selon la revendication 1, dans lequel la section corps (111) est adaptée pour se situer sensiblement de niveau avec : une paroi du canal d'écoulement (101) ; une paroi du canal d'écoulement (101) et une partie au moins de la base du canal d'écoulement ; ou les parois du canal d'écoulement (101) et la base du canal d'écoulement (101).

3. Guide de câble selon la revendication 2, dans lequel, afin que la section corps (111) puisse se trouver sensiblement de niveau avec la paroi du canal d'écoulement (101), une face de la section corps (111) présente une forme qui lui permet de correspondre avec la paroi du canal d'écoulement (101), et une seconde face de la section corps (111) forme une frontière vis-à-vis du canal d'écoulement, la seconde face présentant une forme, et / ou étant adaptée, afin de minimiser les perturbations infligées à l'écoulement.

4. Guide de câble selon la revendication 3, dans lequel l'ouverture disposée sur la section corps (111) est disposée sur la seconde face, et le câble court à travers la seconde face du corps vers l'ouverture.

5. Guide de câble selon l'une quelconque des revendications précédentes, dans lequel un ou plusieurs colliers de câble (115) sont prévus, le ou les colliers (115) se situant sur la seconde face de la section corps (111).

6. Guide de câble selon la revendication 5, dans lequel le ou les colliers (115) comprennent une paire de mâchoires élastiques adaptées pour retenir un câble (105) poussé dans une position entre les mâchoires.

7. Guide de câble selon la revendication 5 ou la revendication 6, dans lequel un élément de blocage est prévu, l'élément de blocage étant adapté, en service, pour s'enrouler autour du câble (105) et enfermer le câble à l'intérieur du collier (115).

8. Guide de câble selon l'une quelconque des revendications 2 à 7, dans lequel le câble (105) court à travers la première face du corps pour pénétrer dans le passage, et la section corps et / ou la paroi du canal d'écoulement sont dotées d'un canal renfoncé le long duquel le câble (105) peut courir.

9. Guide de câble selon l'une quelconque des revendications précédentes, dans lequel la section bras (112) est adaptée pour réduire au minimum les perturbations infligées à tout écoulement à l'extérieur du canal d'écoulement (101).

10. Guide de câble selon l'une quelconque des revendications précédentes, dans lequel la section bras (112) et / ou la partie corps (111) sont retenues en position au moyen d'un adhésif approprié.

11. Guide de câble selon l'une quelconque des revendications précédentes, dans lequel la section corps (111) est fixée en position par des moyens de fixation tels que des boulons, des vis, des clous ou similaires, introduits dans la paroi du canal d'écoulement (101) grâce à des trous de fixation prévus dans le corps.

12. Guide de câble selon l'une quelconque des revendications précédentes, dans lequel la section bras (112) et / ou la partie corps sont adaptées pour se situer dans une rainure préexistante ou préparée de manière spécifique (103), ou dans un renfoncement dans l'égout.

13. Guide de câble selon l'une quelconque des revendications, dans lequel la section corps (111) comprend un panneau (211) dont la forme lui permet de se conformer au profil du canal d'écoulement (101), et la section bras (112) comprend un tube qui fait saillie à partir de la face de la section corps (111), adapté pour se conformer au profil du canal d'écoulement (101).

14. Réseau comprenant : un ou plusieurs câbles (105) disposés le long de canaux d'écoulement (101) d'égouts ; et un ou plusieurs guides de câbles (110) selon l'une quelconque des revendications 1 à 13.

15. Réseau selon la revendication 14, dans lequel un guide de câble (110) est disposé au niveau de chaque point où un câble (105) doit pénétrer dans le canal d'écoulement (101) d'un égout, ou sortir de celui-ci.

16. Réseau selon la revendication 14 ou la revendication 15, dans lequel le câble (105) est immobilisé sur les parois ou sur le plafond de l'égout une fois qu'il a quitté le canal d'écoulement (101), et / ou le câble (105) est introduit dans un tube ou un conduit de dérivation ou dans un conduit de sortie une fois qu'il a quitté le canal d'écoulement (101).

17. Réseau selon l'une quelconque des revendications 14 à 16, dans lequel le point de sortie du câble (105) hors de l'égout est scellé autour du câble (105) de façon à empêcher une fuite de gaz nocifs ou désagréables.

18. Réseau selon l'une quelconque des revendications 14 à 17, dans lequel les câbles (105) à l'intérieur du réseau sont adaptés pour véhiculer des signaux de données électriques ou des signaux de données optiques.

19. Procédé destiné à poser un réseau câblé qui incorpore au moins un câble (105) qui se situe dans le canal d'écoulement (101) d'un égout, comprenant les étapes consistant à : poser un câble (105) dans le canal d'écoulement (101) d'un égout; installer un guide de câble (110) selon l'une quelconque des revendications 1 à 18 à des points où le câble (105) doit pénétrer dans le canal d'écoulement (101), ou sortir de celui-ci ; et faire passer le câble (105) à travers le guide de câble.

20. Procédé selon la revendication 19, dans lequel le procédé comprend en outre une étape consistant à prévoir la sortie du câble (105) du canal d'écoulement (101) de chaque côté de courbures et / ou de jonctions dans l'égout et à des endroits où le câble (105) doit complètement sortir de l'égout.

21. Procédé selon la revendication 19 ou la revendication 20, dans lequel le procédé comprend une étape consistant à immobiliser le câble (105) sur les parois ou sur le plafond de l'égout une fois qu'il a quitté le canal d'écoulement (101), et / ou dans lequel le procédé comprend une étape consistant à faire passer le câble (105) dans un tube ou un conduit de dérivation ou dans un conduit de sortie une fois qu'il a quitté le canal d'écoulement (101).

22. Procédé selon l'une quelconque des revendications 19 à 21, dans lequel le procédé comprend une étape consistant à sceller le point de sortie autour du câble (105) de façon à empêcher une fuite de gaz nocifs ou désagréables.

23. Procédé destiné à installer un guide de câble du type revendiqué dans l'une quelconque des revendications 1 à 18, dans le canal d'écoulement (101) d'un égout, comprenant les étapes consistant à: appliquer de l'adhésif sur le guide de câble (110) ; et positionner le guide de câble à un emplacement souhaité dans le canal d'écoulement (101) d'un égout.

24. Procédé selon la revendication 23, dans lequel le procédé incorpore l'étape consistant à fournir une rainure ou un renfoncement de la section bras (112) et / ou de la partie corps (111).

25. Procédé selon la revendication 23 ou la revendication 24, dans lequel le procédé comprend une autre étape consistant à appliquer un matériau de remplissage sur la section bras (112) et / ou sur la partie corps de façon à fournir une surface lisse, le matériau de remplissage présentant une viscosité suffisante pour conserver sensiblement sa forme tout en durcissant.
